# EUROPEAN PATENT APPLICATION

(11) **EP 3 313 146 A1**
(43) Date of publication of application: **25.04.2018**
(21) Application number: 16194328.7
(22) Date of filing: 18.10.2016
(51) Int. Cl.: H05B 6/12

(54) **INDUCTION HEATING ARRANGEMENT**

(71) Applicant: Electrolux Appliances Aktiebolag, 105 45 Stockholm (SE)
(72) Inventor: VIROLI, Alex, 47122 Forli (IT); JEANNETEAU, Laurent, 47122 Forli (IT); MILANESI, Filippo, 47122 Forli (IT)
(74) Representative: Electrolux Group Patents

(57) **Abstract**

The invention relates to an induction heating arrangement comprising an induction coil (2) and a ferrite element arrangement (3), said ferrite element arrangement (3) comprising one or more ferrite portions (4), each ferrite portion (4) being formed by a ferrite element group comprising multiple ferrite elements (5), wherein the ferrite elements (5) of said ferrite element group are arranged according to a grid pattern in order to build a ferrite portion (4) with a desired shape.

## Description

The present invention relates generally to the field of induction heating. More specifically, the present invention is related to an induction heating arrangement comprising a ferrite element arrangement with multiple small-sized ferrite elements.

### BACKGROUND OF THE INVENTION

Induction hobs for preparing food are well known in prior art. Induction hobs typically comprise at least one heating zone which is associated with at least one induction coil. For heating a piece of cookware placed on the heating zone, the induction coil is coupled with electronic driving means for driving an AC current through the induction coil.

Induction hobs are known which comprise one or more ferrite elements in order to improve the efficiency of the induction coil. Said one or more ferrite elements may be arranged below the induction coil, i.e. opposite to the hob plate at which the piece of cookware to be heated is located.

Recent trends in induction heating, e.g. flexible heating zone concepts based on an array of induction coils, lead to different shapes of induction coils (e.g. triangular induction coils) which can only be equipped with corresponding ferrite elements with inordinate effort.

### SUMMARY OF THE INVENTION

It is an objective of embodiments of the present invention to provide an induction heating arrangement with a ferrite element arrangement which increases the efficiency of the induction coil and which can be adapted to the shape of the base area of the induction coil with reasonable effort. The objective is solved by the features of the independent claims. Preferred embodiments are given in the dependent claims. If not explicitly indicated otherwise, embodiments of the invention can be freely combined with each other.

According to an aspect, the invention relates to an induction heating arrangement comprising an induction coil and a ferrite element arrangement. The ferrite element arrangement comprises one or more ferrite portions wherein each ferrite portion is build by a ferrite element group comprising multiple ferrite elements. The ferrite elements of said ferrite element group are arranged according to a grid pattern in order to build a ferrite portion with a desired shape. More in detail, the ferrite elements may be small-sized, brick-like ferrite units which are arranged in a pixel-like or mosaic-like manner next to each other in order to form a ferrite element arrangement of larger scale.

The main advantage of the present invention is that by using multiple ferrite elements which are arranged according to a grid pattern, arbitrary-shaped ferrite portions can be created wherein the shape of the ferrite portions can be chosen according to the shape of the base area of the induction coil. In addition, a plurality of shapes of induction coils can be covered by a single shape of the ferrite elements or a limited set of ferrite element shapes which reduces the effort for manufacturing the induction heating arrangement. Finally, the arrangement of ferrite elements according to a grid pattern facilitates the automatic equipping of a base portion with ferrite elements by an automatic placement machine.

According to preferred embodiments, all ferrite elements of said ferrite portion comprise the same ferrite element shape. Said equally shaped ferrite elements within a certain ferrite portion are arranged in a periodic fashion next to each other. Also the cells provided by the grid pattern may comprise the same shape. Thereby, the manufacturing process of the induction heating arrangement can be further simplified.

According to preferred embodiments, the ferrite portion is build by a repetitive pattern of ferrite elements, said repetitive pattern comprising ferrite elements with two or more different shapes. Due to the repetitive pattern of ferrite cells with two or more different shapes, a mosaic-like ferrite portion is created which can be adapted to the shape of the base area of the induction coil with increased accuracy.

According to preferred embodiments, the ferrite elements comprise a triangular, square, hexagonal, rhomboidal or polygonal shape. Also other shapes may be possible within the scope of the present invention.

According to preferred embodiments, the ferrite elements of a certain ferrite portion form a contiguous ferrite element arrangement in which the ferrite elements are arranged in pixel-like manner in close proximity to each other. The term "pixel-like manner" in the context of the present invention means that ferrite elements comprising a single shape or a limited set of shapes are arranged next to each other in order to form a large-scale ferrite portion. So in other words, the ferrite elements are arranged such that there are no large-scale gaps between the ferrite elements. Thereby, the efficiency of the induction coil can be further improved.

According to preferred embodiments, adjacent ferrite elements comprise straight edges and said straight edges are arranged in parallel next to each other. Thereby, a grid-like or mosaic-like ferrite element arrangement is obtained which improves the efficiency of the induction coil and reduces the generation of acoustic noise.

According to preferred embodiments, the shape of the ferrite portion is adapted to the shape of the induction coil. Based on the high discretization of the ferrite portion created by the plurality of ferrite elements forming the ferrite portion, the shape of the ferrite portion can be customized according to the shape of the induction coil which is specifically useful with novel induction coil shapes like triangular shapes, elliptic shapes etc.

According to embodiments, the whole or essentially the whole base area of the induction coil is covered by a single ferrite portion. Said single ferrite portion may be formed by a repetitive pattern of ferrite elements. Thereby, the efficiency of the induction coil can be significantly improved.

According to other embodiments, the base area of the induction coil is covered by multiple ferrite portions, said ferrite portions being distributed across the base area of the induction coil. Thereby, a large-scale base area of an induction coil can be associated with multiple ferrite portions which do not cover the whole base area of an induction coil but are located at certain sectors or portions of the base area. Said sectors or portions may be selected such that based on the ferrite portions the efficiency of the induction coil is improved.

According to preferred embodiments, said multiple ferrite portions comprise longitudinal axes which are radially arranged with respect to the centre of the induction coil.

According to preferred embodiments, each of said multiple ferrite portions comprise a T-shape with a first ferrite portion section and a second ferrite portion section, said first and second ferrite portion sections being arranged perpendicular to each other. Thereby ferrite portions can be created at low costs which lead to an improved heat distribution within a piece of cookware to be heated.

According to preferred embodiments, said first ferrite portion section is longer than the second ferrite portion section.

According to a further aspect, the invention relates to an induction hob. The induction hob comprises a hob plate and one or more induction heating arrangements as described before.

The term "ferrite element" as used in the present disclosure may refer to any element of ceramic compound composed of iron oxide (FE₂O₃) which is chemically combined with one or more additional metallic elements.

The term "grid pattern" as used in the present disclosure may refer to any regular, periodic arrangement of cells which are arranged next to each other in immediate proximity. In other words, the cells of the grid pattern may be immediately adjacent.

The term "small-sized ferrite elements" as used in the present disclosure may refer ferrite elements whose largest edge length is smaller than the half, specifically smaller than a third, a quarter or one fifth of the smallest radius or smallest edge length of the induction coil base area.

The term "essentially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: shows an example schematic view of an induction hob comprising multiple induction heating arrangements;
- Fig. 2: shows an example schematic side view of an induction heating arrangement;
- Fig. 3: shows the a base portion of an induction heating arrangement covered by a grid pattern, said grid pattern comprising multiple cells for receiving ferrite elements;
- Fig. 4: shows an example grid pattern with triangular-shaped cells;
- Fig. 5: shows an example grid pattern with hexagonal-shaped cells;
- Fig. 6: shows an example grid pattern with rhomboidal-shaped cells;
- Fig. 7: shows an example mosaic-like grid pattern with first and second cell shapes according to a first embodiment;
- Fig. 8: shows an example mosaic-like grid pattern with first and second cell shapes according to a second embodiment;
- Fig. 9: shows an example mosaic-like grid pattern with first and second cell shapes according to a third embodiment;
- Fig. 10: shows an example ferrite element arrangement with multiple bar-shaped ferrite portions, said ferrite portions comprising multiple ferrite elements;
- Fig. 11: shows an example ferrite element arrangement comprising multiple ferrite elements arranged in a pixel-like manner; and
- Fig. 12: shows an example ferrite element arrangement with multiple T-shaped ferrite portions, said ferrite portions comprising multiple ferrite elements.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

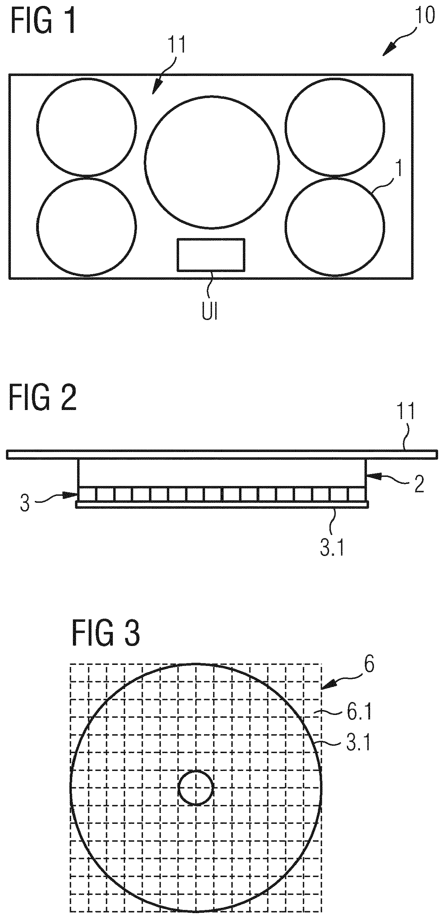

Fig. 1 shows a schematic illustration of an induction hob 10. The induction hob 10 comprises multiple induction heating arrangements 1 provided at a hob plate 11. The induction hob 10 may further comprise a user interface UI for receiving user input and/or for providing information, specifically graphical information to the user.

Fig. 2 shows the induction heating arrangement 1 in closer detail. The induction heating arrangement 1 comprises an induction coil 2 which is arranged below the hob plate 11. Between the induction coil 2 and the hob plate 11 there may be, for example, an additional insulation layer (not shown in Fig. 2). Below the induction coil 2, the induction heating arrangement 1 comprises a ferrite element arrangement 3. The ferrite element arrangement 3 may be arranged in a plane which is parallel or essentially parallel to the plane in which the induction coil 2 is arranged. The ferrite element arrangement 3 may extend over the whole or essentially the whole base area of the induction coil 2. The ferrite element arrangement 3 may be, for example, arranged on a base portion 3.1 having a plate-like shape.

As an example, Fig. 3 shows a ring-shaped base portion 3.1 which is covered by a grid pattern 6. The base portion 3.1 may be adapted to the shape of the induction coil 2 to be placed above the ferrite element arrangement 3. It is worth mentioning that the shape of the base portion 3.1 is a mere example. The base portion 3.1, respectively, the ferrite element arrangement 3 may have any shape, specifically a shape according to a free-form induction coil 2, e.g. elliptical, triangular, polygonal etc.

Based on said grid pattern 6, a plurality of cells 6.1 are provided at the base area of the induction coil 2, each cell 6.1 being adapted to receive one ferrite element 5. The ferrite elements may comprise essentially the same shape and/or essentially the same size as the cells 6.1 of the grid pattern 6. It is worth mentioning that the grid pattern 6 may be a physically existing grid comprising a plurality of segments, said segments forming the cells 6.1. However, according to other embodiments, the grid pattern 6 may a mere virtual pattern (i.e. physically non-existing) used for arranging the ferrite elements, for example, by means of an automatic ferrite element arrangement process.

Furthermore, it is worth mentioning that the square shape of the cells 6.1 of the grid pattern 6 is a mere example. According to other embodiments, the cells 6.1 may have any other shape, e.g. triangular, hexagonal, rectangular etc.

Based on the grid pattern 6, the base area of the induction coil 2 is segmented in a plurality of small-sized cells 6.1 in which the ferrite elements 5 can be arranged. Thereby, the manufacturing process of the induction heating arrangement 1 can be simplified because arbitrary formed coil areas can be equipped with said small-sized ferrite elements 5. In addition, the induction heating arrangement 1 can be manufactured at lower costs because arbitrary formed coil areas can be equipped with ferrite elements 5 having a single ferrite element shape or a limited number of ferrite element shapes which are used in the equipment process in a repetitive manner. Furthermore, due to the high discretization of the coil area, a complex shape of an induction coil 2 can be reproduced and the modular concept of arranging small-sized ferrite elements 5 supports the automatic production of induction heating arrangements 1.

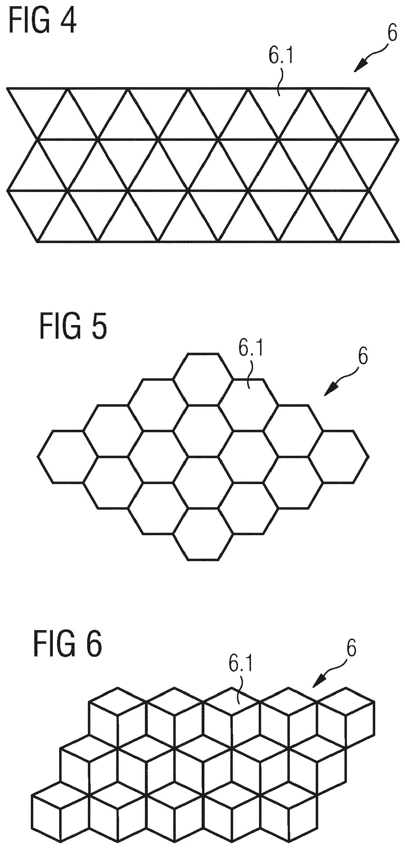

Fig. 4 to fig. 6 show example embodiments of grid pattern 6 which can be used for arranging ferrite elements 5. In fig. 4, a grid pattern 6 with triangular cells 6.1 is used. Fig. 5 shows a grid pattern based on hexagonal cells 6.1. Finally, fig. 6 comprises cells 6.1 with a rhomboidal shape. However, the shown embodiments should be interpreted as non-limiting, i.e. the cells can also have other shapes not shown in the present embodiments.

The grid pattern 6 shown in fig. 3 to fig. 6 use a single cell shape for creating the grid pattern 6. The cells 6.1 having a single shape may be arranged immediately next to each other in a repetitive manner in order to cover the base area of the induction coil.

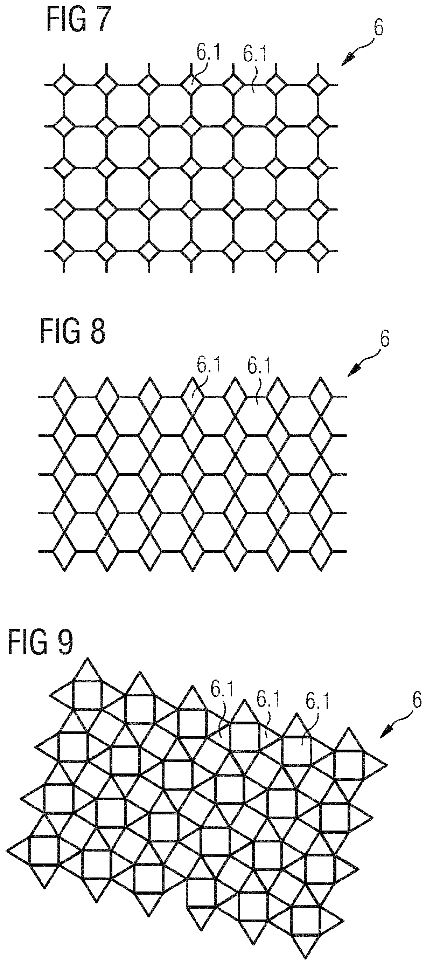

Fig. 7 to 9 show further examples of grid pattern 6 which comprise cells 6.1 with multiple different cell shapes. Each embodiment shown in fig. 7 to 9 use two different cell shapes within the grid pattern 6. Thereby it is possible to fit the ferrite element arrangement 3 more exactly to the base area of the induction coil. For example, a first cell shape may be a square with cut-off corners and a second cell shape may be square with a smaller-sized edge length (Fig. 7). Fig. 8 uses a first cell type with hexagonal cells and a second cell type with diamond-shaped cells. Finally, fig. 9 comprises a first cell type with square cells and a second cell type with triangular-shaped cells. The different cell types may be arranged in a periodic manner (repetitive pattern) in order to form the ferrite element arrangement 3. The ferrite element arrangements 3 shown in Fig. 3 to Fig. 9 may be characterized by ferrite elements 5 having straight edges 5.1 which are arranged in close proximity to each other. For example, a pair of adjacent edges 5.1 of neighboured ferrite elements 5 may be arranged in parallel. Thereby, a mosaic-like pattern of ferrite elements 5 is created.

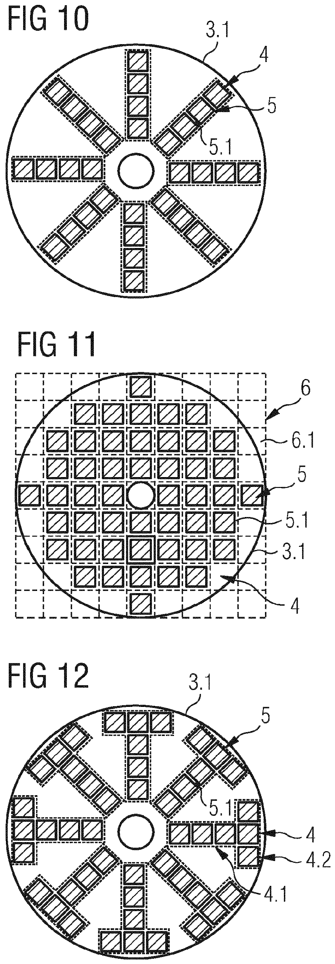

Fig. 10 illustrates an example embodiment of a ferrite element arrangement 3 comprising multiple separated ferrite portions 4, wherein each of said ferrite portions 4 are build by an arrangement of multiple ferrite elements 5. The ferrite portions 4 may be arranged at a certain distance to each other and/or in a different angular orientation. For example, the ferrite portions 4 may comprise a bar-like shape and may be arranged in a star-like manner in order to be arranged in a radial direction with respect to a circular base area of the induction coil 2. For example, each ferrite portion 4 may comprise multiple ferrite elements which are arranged linearly in one or more columns.

Fig. 11 shows another way of creating a ferrite element arrangement 3 for a circular induction coil 2. The ferrite element arrangement 3 comprises a single ferrite portion 4 which is formed by a pixel-like arrangement of ferrite elements 5 in rows and columns according to the given grid pattern 6. Thereby, the whole or essentially the whole base area of the induction coil 2 can be equipped by small-sized ferrite elements 5. As already mentioned before, the ferrite elements 5 may be arranged based on an automatic assembly process.

The ferrite elements 5 may be fixed at the base portion 3.1 by means of known fixing methods, e.g. by gluing, bonding, welding etc.

Using a plurality of small-sized ferrite elements 5 which are arranged according to said grid pattern 6, the heat distribution in a piece of cookware placed on the induction hob and the coil efficiency can be improved. In addition, the occurrence of acoustic noise of the pot is reduced.

Fig. 12 shows a further embodiment of a ferrite element arrangement 3 comprising multiple separated ferrite portions 4, wherein each of said ferrite portions 4 is build by an arrangement of multiple ferrite elements 5. The ferrite portions 4 are arranged in a star-like manner with their longitudinal axes arranged in a radial direction with respect to the centre of the induction coil 2. Each ferrite portion 4 comprise a T-shape with a first ferrite portion section 4.1 being longer than the second ferrite portion section 4.2. Said first and second ferrite portion sections 4.1, 4.2 are arranged perpendicular to each other and the second ferrite portion section 4.2 is located at the outer of the first ferrite portion section 4.1. So in other words, the second ferrite portion sections 4.2 are arranged in the area of the outer circumferential boundary of the induction coil 2. Such ferrite portion arrangement provides an improved heat distribution within the piece of cookware to be heated. Using a modular ferrite structure with multiple brick-like ferrite elements 5 facilitates the usage of ferrite portions 4 with a complex shape.

It should be noted that the description and drawings merely illustrate the principles of the proposed induction heating arrangement. Those skilled in the art will be able to implement various arrangements that, although not explicitly described or shown herein, embody the principles of the invention.

### List of reference numerals

- 1: induction heating arrangement
- 2: induction coil
- 3: ferrite element arrangement
- 3.1: base portion
- 4: ferrite portion
- 5: ferrite element
- 5.1: edge
- 6: grid pattern
- 6.1: cell

- 10: induction hob
- 11: hob plate

- UI: user interface

## Claims

1. Induction heating arrangement comprising an induction coil (2) and a ferrite element arrangement (3), said ferrite element arrangement (3) comprising one or more ferrite portions (4), each ferrite portion (4) being formed by a ferrite element group comprising multiple ferrite elements (5), wherein the ferrite elements (5) of said ferrite element group are arranged according to a grid pattern in order to build a ferrite portion (4) with a desired shape.

2. Induction heating arrangement according to claim 1, wherein all ferrite elements (5) of said ferrite portion (4) comprise the same ferrite element shape.

3. Induction heating arrangement according to claim 1 or 2, wherein the ferrite portion (4) is build by a repetitive pattern of ferrite elements (5), said repetitive pattern comprising ferrite elements (5) with two or more different shapes.

4. Induction heating arrangement according to anyone of the preceding claims, wherein the ferrite elements (5) comprise a triangular, square, hexagonal, rhomboidal or polygonal shape.

5. Induction heating arrangement according to anyone of the preceding claims, wherein the ferrite elements (5) of a certain ferrite portion (4) form a contiguous ferrite element arrangement in which the ferrite elements (5) are arranged in pixel-like manner in close proximity to each other.

6. Induction heating arrangement according to anyone of the preceding claims, wherein adjacent ferrite elements (5) comprise straight edges (5.1), said straight edges (5.1) being arranged in parallel next to each other.

7. Induction heating arrangement according to anyone of the preceding claims, wherein the shape of the ferrite portion (4) is adapted to the shape of the induction coil (2).

8. Induction heating arrangement according to anyone of the preceding claims, wherein the whole or essentially the whole base area of the induction coil (2) is covered by a single ferrite portion (4).

9. Induction heating arrangement according to anyone of the preceding claims 1 to 7, wherein the base area of the induction coil (2) is covered by multiple ferrite portions (4), said ferrite portions (4) being distributed across the base area of the induction coil (2).

10. Induction heating arrangement according to claim 8, wherein said multiple ferrite portions (4) comprise longitudinal axes which are radially arranged with respect to the centre of the induction coil (2).

11. Induction heating arrangement according to claim 8 or 9, wherein each of said multiple ferrite portions (4) comprise a T-shape with a first ferrite portion section (4.1) and a second ferrite portion section (4.2), said first and second ferrite portion sections (4.1, 4.2) being arranged perpendicular to each other.

12. Induction heating arrangement according to claim 11, wherein said first ferrite portion section (4.1) is longer than the second ferrite portion section (4.2).

13. Induction hob (10) comprising a hob plate (11) and one or more induction heating arrangements (1) according to anyone of the preceding claims.
